# EUROPEAN PATENT APPLICATION

(11) **EP 1 901 532 A2**
(43) Date of publication of application: **19.03.2008**
(21) Application number: 07116462.8
(22) Date of filing: 14.09.2007
(51) Int. Cl.: H04M 1/02

(54) **Flip-up type mobile phone**

(30) Priority: 18.09.2006 KR 20060090178
(71) Applicant: Samsung Electronics Co., Ltd., Suwon-si, Gyeonggi-do 442-743 (KR)
(72) Inventor: Park, Jun-Sang, Gyeonggi-do (KR); Kim, Joon-Suh, Gyeonggi-do (KR); Lee, Chang-Soo, Gyeonggi-do (KR)
(74) Representative: Grünecker, Kinkeldey, Stockmair & Schwanhäusser Anwaltssozietät

(57) **Abstract**

A mobile phone includes a body section including a plurality of keys provided on an upper surface thereof; a projecting section projecting on an upper end region of the upper surface of the body section to have a predetermined thickness and having a first display unit mounted to an upper surface thereof; and a flip section rotatably coupled to the projecting section so that the flip section can be folded and unfolded with respect to the upper surface of the body section to close and open the keys, and having a second display unit mounted to an upper surface thereof and a third display unit mounted to a lower surface thereof, the flip section always opening the first display unit irrespective of rotation thereof.

## Description

The present invention relates to mobile phones including a Digital Multimedia Broadcasting (DMB) phone, a game phone, a chatting phone, a camera phone, an MP3 phone, a cellular phone, a Personal Communication System (PCS) phone, a Personal Digital Assistant (PDA), a hand-held phone (HHP), etc., and more particularly, to a mobile phone which is convenient to use not only in a phone mode but also in multimedia modes including a DMB mode and a PMP (Portable Multimedia Player) mode.

A mobile phone is an electronic device which can implement wireless communication with another party while being carried by a user. Exemplary functions of a mobile phone include audio communication, message transmission, file transmission, video communication, a camera, etc. Also, a mobile phone plays the roles of a private secretary, such as of administrating phone numbers and a personal schedule.

A mobile phone tends toward miniaturization, slimness, improved grip, and lightweight in consideration of portability, and has been developed to serve as a multimedia phone capable of performing various services and functions. For example, in a mobile phone, entertainment contents including games, software applications, etc. have been regarded as important. In the future, a mobile phone will be developed to be able to perform multiple complicated functions including audio communication, video communication, games, the Internet, a camera, etc.

The conventional mobile phones are divided into a bar type and a folder type depending upon outer shapes thereof in consideration of portability and convenience in use. In the bar type mobile phone, a single housing is formed in the shape of a bar, and a data input and output section, an antenna, a transmitting and receiving section, etc. are mounted to the housing. In the folder type mobile phone, a folder is rotatably connected to a single bar-type housing by a hinge unit to be folded to and unfolded from the housing. Therefore, in the folder type mobile phone, due to the fact that keys are located on the housing and a display unit is located on the folder, advantages are provided in miniaturization and portability. A typical example of a folder type mobile phone is described in U.S. Patent No. 6,865,406, in which a camera lens housing is mounted to a hinge unit.

In the conventional mobile phone, inconvenience is insignificant for inputting data and confirming displayed data under a phone mode which allows audio communication and transmission of a text message. However, inconvenience may arise under a multimedia environment.

For example, under a DMB mode, a game mode, etc., a problem arises in that a wide window is not provided to the display unit. Under a DMB mode or a game mode, a wide window must be provided, and key manipulation convenience must be satisfactory. Under entire operation modes, the most important User Interface (UI) environment is that it is convenient to see the screen displayed on a display unit, so that desired data can be conveniently input.

Of course, the problem can be solved by increasing the overall size of the mobile phone to mount a wide display unit and arrange an increased number of keys. Nevertheless, although this is the case, the miniaturization of the mobile phone is adversely affected, and the portability thereof deteriorates.

Further, in the conventional mobile phone, a keypad well known in the art is used to constitute keys, and a component part such as a metal dome array is essentially mounted to the keypad. Therefore, in view of UI environment, it is inconvenient and bothersome to commonly use the keypad under both a phone mode and a multimedia mode.

Accordingly, the present invention has been made to solve the above-mentioned problems occurring in the prior art, and the object of the present invention is to provide a mobile phone in which an always opened display unit is provided and used under both a phone mode and a multimedia mode, thereby optimizing UI environment.

This object is solved by the invention as claimed in the independent claims.

Preferred embodiments are defined in the dependent claims.

Another aspect of the present invention is to provide a mobile phone in which an image file, a preview of a broadcasting channel, favorites, etc. can be displayed on an always opened display unit, thereby providing convenience in use.

Another aspect of the present invention is to provide a mobile phone in which an always opened display unit is utilized as an information input/output part so that the number of keys is minimized, thereby rendering a simple and aesthetically appealing outer appearance and improving UI environment.

Another aspect of the present invention is to provide a mobile phone in which a bidirectional display unit is mounted to a flip so that a first wide display unit mounted to the outer surface of the flip is used with the flip closed and a second wide display unit mounted to the inner surface of the flip is used with the flip opened, thereby improving UI environment associated with output of data.

In order to achieve the above aspects, according to the present invention, there is provided a mobile phone including a body section including an arrangement of a plurality of keys on an upper surface thereof; a projecting section projecting on an upper end region of the upper surface of the body section to have a predetermined thickness and having a first display unit mounted to an upper surface thereof; and a flip section rotatably coupled to the projecting section so that the flip section can be folded and unfolded with respect to the upper surface of the body section to close and open the keys, and having a second display unit mounted to an upper surface thereof and a third display unit mounted to a lower surface thereof, the flip section always exposing the first display unit irrespective of rotation thereof.

The above and other aspects, features and advantages of the present invention will be more apparent from the following detailed description taken in conjunction with the accompanying drawings, in which:
FIGs. 1 and 2 are perspective views illustrating a flip-up type mobile phone with a flip folded in accordance with an embodiment of the present invention, wherein FIG. 2 illustrates a state where the mobile phone is used in a DMB mode or a PMP mode;
FIG. 3 is a bottom view of FIG. 2;
FIG. 4 is a side view of FIG. 2;
FIG. 5 is a perspective view illustrating the flip-up type mobile phone in accordance with the embodiment of the present invention which is used under a phone mode with the flip unfolded;
FIG. 6 is a side view of FIG. 5; and
FIG. 7 is a plan view illustrating the flip-up type mobile phone in accordance with the embodiment of the present invention in a state where the flip is separated from a body section.

Hereinafter, a preferred embodiment of the present invention will be described with reference to the accompanying drawings. In the following description of the present invention, a detailed description of known functions and configurations incorporated herein will be omitted for clarity and conciseness.

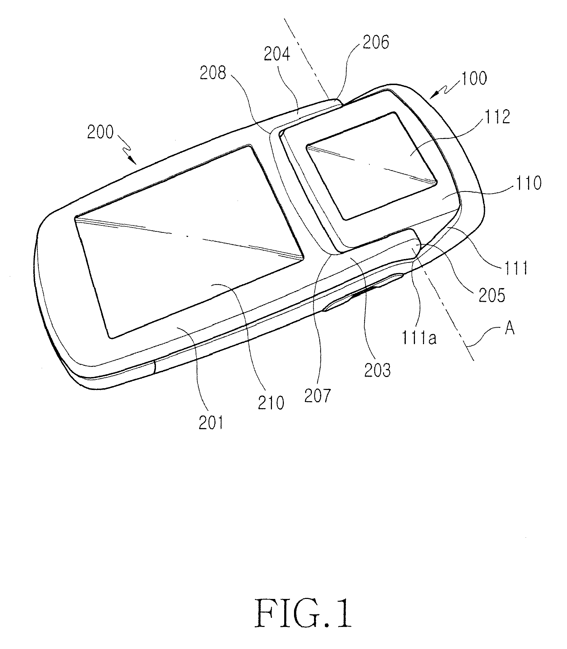

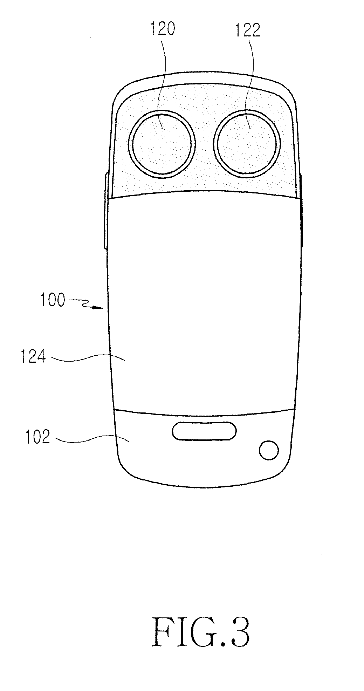

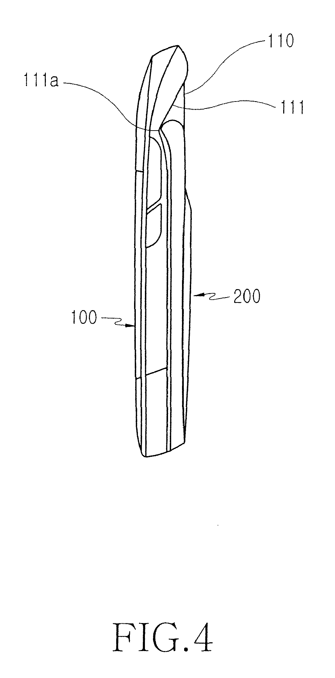

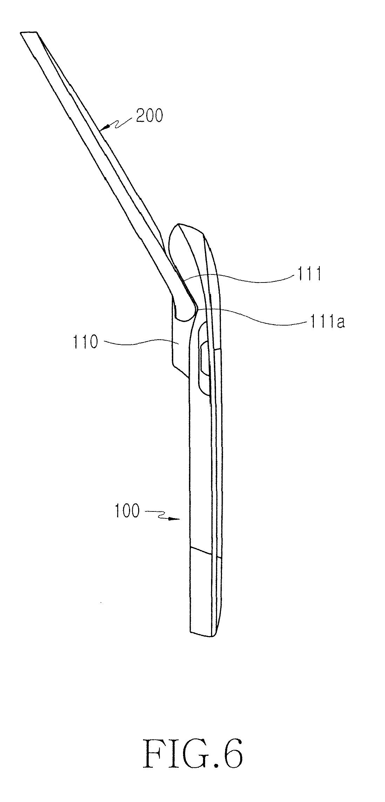

Referring to FIGs. 1 through 6, a mobile phone in accordance with an embodiment of the present invention constitutes a flip-up type mobile phone. The phrase "flip-up type mobile phone" indicates a mobile phone in which a flip section 200 is rotated upward and downward with respect to a body section 100 (when viewed from a user) to open and close a predetermined region of the upper surface 101 of the body section 100. In the flip-up type mobile phone according to the present invention, three display units 112, 210 and 220 are located in place, and one display unit 112 is constructed to be always opened to improve UI environment for a user.

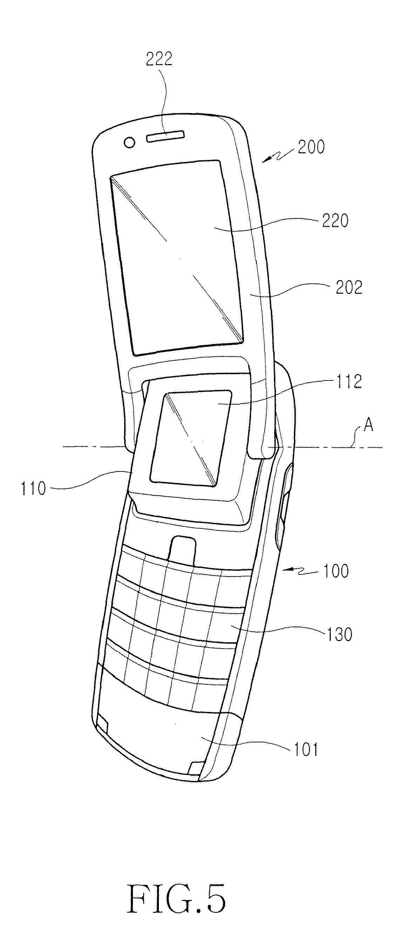

The mobile phone according to the present invention includes the body section 100, a projecting section 110 formed on the body section 100, and the flip section 200 rotatably coupled to the projecting section 110. The flip section 200 can be folded and unfolded with respect to the upper surface 101 of the body section 100 to close and open the predetermined region of the upper surface 101 of the body section 100. The projecting section 110 projects on an upper region of the upper surface 101 of the body section 100 to have a predetermined thickness, and a plurality of keys 130 (see FIG. 5) is arranged on a lower region of the upper surface 101 of the body section 100.

A first display unit 112 is located on the upper surface of the projecting section 110. The first display unit 112 is always opened to a user, and includes an information input/output part. The information input/output part of the first display unit 112 includes a touch screen or a virtual key. Since the first display unit 112 is constructed to be always opened, it can be commonly used under a phone mode and a multimedia mode. In particular, the first display unit 112 may include a four-directional touch key or a virtual navi-key.

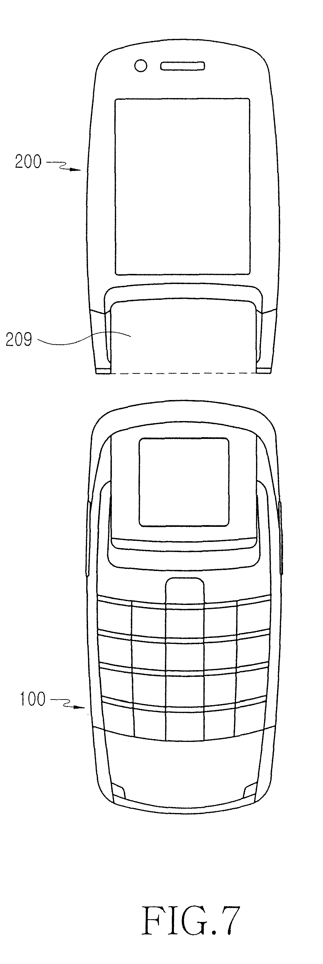

Also, the flip section 200 has a second display unit 210 mounted to an outer surface 201 thereof and a third display unit 220 mounted to an inner surface 202 thereof. The second and third display units 210 and 220 include liquid crystal display devices. That is to say, the flip section 200 includes a bidirectional display unit. The second and third display units 210 and 220 are stacked upon each other. The flip section 200 is rotatably coupled to the projecting section 110 so that the flip section 200 can be folded and unfolded with respect to the upper surface 101 of the body section 100 to close and open the plurality of keys 130 located on the upper surface 101 of the body section 100. Further, the flip section 200 has an opening 209 (see FIG. 7) which will be described later, to always open the first display unit 112 irrespective of the rotation thereof.

Describing the shape of the flip section 200 with reference to FIGs. 1 through 7, the flip section 200 includes a pair of connection arms 203 and 204 which extend from the second and third display units 210 and 220 in the lengthwise direction of the body section 100; a pair of hinge parts 205 and 206 which are formed on the distal ends of the pair of connection arms 203 and 204; and the opening 209 which is defined between the pair of connection arms 203 and 204 in the shape of a box to always open the first display unit 112. The shape of the opening 209 is defined to accommodate about one half of the projecting section 110. A pair of necks 207 and 208 are formed between the second and third display units 210 and 220 and the pair of connection arms 203 and 204. The pair of hinge parts 205 and 206 are respectively coupled to both sides of the projecting section 110 by hinge modules (not shown). A hinge axis A which passes through the pair of hinge parts 205 and 206 passes through both sides of the projecting section 110 and in particular, the center portions of both sides of the first display unit 112. The opening 209 accommodates about one half of the projecting section 110.

Each side of the projecting section 110 has an inclined surface 111 so that the flip section 200 in the opened state can be supported by the inclined surface 111. In other words, the inclined surface 111 serves as a stopper and a supporter for the flip section 200. A rounded portion 111a is formed at a predetermined position on the inclined surface 111 to stably guide the rotating operation of the hinge parts 205 and 206.

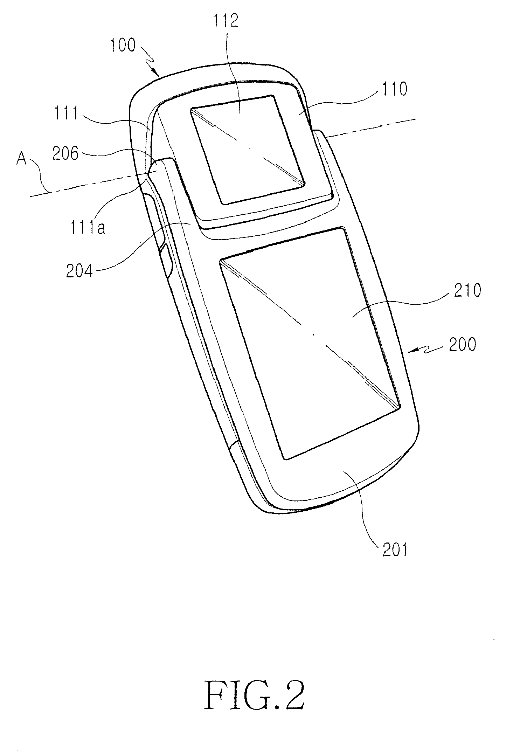

FIG. 5 illustrates a state in which the mobile phone is used under a phone mode, and FIGs. 1 and 2 illustrate a state in which the mobile phone is used under a multimedia mode, specifically, a DMB mode or a PMP mode. The second display unit 210 provides a wide display screen when horizontally viewed.

In the states shown in FIGs. 1 and 2, the second display unit 210 is used for horizontal viewing, and multimedia-related user interface icons are displayed on the first display unit 112.

Further, in the state shown in FIG. 5, phone-related user interface icons are displayed on the first display unit 112. As a result, icons for a channel preview, an image preview, favorites, an equalizer for a music file, etc. can be displayed on the first display unit 112.

From the above description, the mobile phone according to the present invention provides advantages in that UI environment is improved under not only a phone mode but also a multimedia mode. In particular, in the present invention, since an always opened display unit is utilized as an information input/output part, the number of keys is minimized, and a simple and aesthetically appealing outer appearance is provided, whereby U I environment associated with input and output of data is improved.

Further, in the present invention, due to the fact that a bidirectional display unit is mounted to a flip, a first wide display unit mounted to the outer surface of the flip is used with the flip closed, and a second wide display unit mounted to the inner surface of the flip is used with the flip opened, whereby UI environment associated with output of data is improved.

While the invention has been shown and described with reference to a certain preferred embodiment thereof, it will be understood by those skilled in the art that various changes in form and details may be made therein without departing from the scope of the invention as defined by the appended claims.

## Claims

1. A mobile phone comprising:
a body section having a first upper surface and receiving a first display unit on an upper end region of the first upper surface; and
a flip section rotatably coupled to the body section at the upper end region so that the flip section can be folded and unfolded about a hinge axis to close and open the first upper surface while the first display unit is always open.

2. The mobile phone according to claim 1, wherein the first display unit comprises an information input/output part which comprises at least one of a touch screen, a virtual keyboard, and virtual keys.

3. The mobile phone according to claim 1 or 2, wherein the first display unit is disposed in a projecting section projecting on the upper end region.

4. The mobile phone according to claim 3, wherein the projecting section has a predetermined thickness from the first upper surface.

5. The mobile phone according to claim 3 or 4, wherein each side of the projecting section has an inclined surface so that the inclined surface supports the flip section when the flip section is unfolded.

6. The mobile phone according to claim 5, wherein the inclined surface has a curved portion.

7. The mobile phone according to one of claims 3 to 6, wherein the flip section comprises:
a pair of connection arms;
a pair of hinge parts formed on distal ends of the connection arms; and
an opening defined between the connection arms in a box shape to always open the first display unit.

8. The mobile phone according to claim 7, wherein the opening has a shape which corresponds to a portion of the projecting section.

9. The mobile phone according to one of claims 1 to 8, wherein the hinge axis is parallel to the first upper surface.

10. The mobile phone according to claim 9, wherein the hinge axis extends in a latitudinal direction of the body section.

11. The mobile phone according to one of claims 1 to 10, wherein the body section includes a plurality of keys disposed on the first upper surface.

12. The mobile phone according to one of claims 1 to 11, wherein the flip section receives a second display unit mounted on an outer surface of the flip section and a third display unit mounted on an inner surface of the flip section, the outer surface opposite the inner surface, the inner surface facing the first upper surface when the flip section is folded.
